# FASCICULE DE BREVET EUROPEEN

(11) **EP 2 276 616 B1**
(45) Date de publication et mention de la délivrance du brevet: **03.06.2020**
(21) Numéro de dépôt: 09761868.0
(22) Date de dépôt: 14.05.2009
(51) Int. Cl.: B29C 37/00, B05D 1/06, C09D 5/25, C09D 5/24

(54) **PROCÉDÉ POUR FABRIQUER UN SUBSTRAT ÉLECTRIQUEMENT NON CONDUCTEUR PEINT**
VERFAHREN ZUR HERSTELLUNG EINES NICHTLEITENDEN LACKIERTEN SUBSTRATS
METHOD FOR MANUFACTURING ELECTRICALLY NON-CONDUCTIVE PAINTED SUBSTRATE

(30) Priorité: 19.05.2008 FR 0802677
(43) Date de publication de la demande: 26.01.2011
(73) Titulaire: Airbus Helicopters, 13725 Marignane Cedex (FR)
(72) Inventeur: CHAIRAT, Claire, F-13300 Salon de Provence (FR); BUREL, Olivier, F-13320 Bouc Bel Air (FR); BERTHIER, Jean-Marc, F-13410 Lambesc (FR)
(74) Mandataire: GPI & Associés
(86) Numéro de dépôt international: PCT/FR2009/000571
(87) Numéro de publication internationale: WO 2009/150317

(56) Documents cités:
- WO-A-94/06611
- FR-A- 2 247 337
- FR-A1- 2 683 763
- US-A- 4 681 712
- US-A1- 2003 049 413

## Description

La présente invention concerne un procédé, selon la revendication 1, de fabrication d'un substrat électriquement non conducteur peint, à savoir un substrat isolant en matériaux composites ou plastiques.

L'invention se situe ainsi dans le domaine restreint des procédés de peinture de pièces non métalliques électriquement non conductrices, et plus particulièrement de substrats en matériaux composites ou plastiques.

Un procédé pour fabriquer un substrat peint à l'aide d'une peinture en poudre, ledit substrat étant isolant électriquement est décrit dans le document FR 2 247 337 A.

De manière usuelle, une peinture comporte trois composants à savoir un pigment, un liant, et un solvant.

En effet, le pigment donne la couleur, l'aspect, l'opacité et certaines propriétés spéciales de la peinture, le liant est une substance macromoléculaire permettant la liaison des pigments et charges et l'accrochage de la peinture sur le substrat, alors que le solvant permet de solubiliser le liant et faciliter l'application de la peinture en ajustant la viscosité et la vitesse d'évaporation dudit solvant. Une fois déposée sur le substrat à peindre, le solvant s'évapore et la peinture polymérise ou se transforme par liaison chimique.

Malheureusement, les solvants utilisés incluent généralement des composants organiques volatiles qui sont dangereux pour l'homme et l'environnement. Les normes environnementales étant de plus en plus sévères, il convient d'utiliser des peintures non polluantes.

Il est alors possible d'envisager l'emploi de peintures dont le solvant est de l'eau. Néanmoins, ces peintures contiennent parfois des additifs, du type éther de glycol, nuisibles pour l'environnement.

Par suite, un autre type de peinture a été mis en œuvre, à savoir les peintures en poudre. Ces peintures en poudre sont des matériaux pulvérulents sous forme de poudres thermoplastiques ou thermodurcissables qui ne contiennent plus de solvants.

La peinture en poudre est alors déposée sur le substrat à peindre puis la transformation de la poudre en un feuil de peinture est obtenue par effet thermique, par cuisson dans un four par exemple. Lorsque le substrat à peindre est en métal, l'homme du métier charge électriquement la peinture en poudre, puis l'applique sur le substrat à peindre. Ce substrat étant chargé électriquement avec une polarité inverse de celle de la peinture en poudre, cette peinture en poudre est attirée vers le substrat et adhère à ce support temporairement.

Ainsi, en chauffant par exemple par étuvage la peinture en poudre, cette peinture en poudre fond puis durcit de façon à former un feuil de peinture recouvrant le substrat.

Ce procédé est très efficace mais inadapté en l'état aux substrats électriquement non conducteurs, à savoir en matériaux composites thermodurcissables ou encore thermoplastiques par exemple ou encore de type plastique.

De plus, ce procédé nécessite que le substrat à peindre soit maintenu par une extrémité de sa surface externe. Ce procédé n'est donc pas adapté aux pièces ne possédant pas de surfaces brutes ou aux pièces devant être intégralement recouvertes de peinture.

Selon un premier procédé d'application d'une peinture en poudre sur un matériau électriquement non conducteur, on inclut dans le substrat à peindre un matériau conducteur, tel que du graphite pour améliorer sa conductivité.

Selon un deuxième procédé, le substrat est recouvert d'une couche primaire électriquement conductrice. La peinture en poudre peut alors adhérer au support via sa couche primaire.

Ce procédé répond aux besoins en permettant d'utiliser une peinture en poudre non polluante sur un substrat électriquement non conducteur.

Toutefois, la couche primaire mise en œuvre peut être éventuellement nuisible pour l'environnement. De plus, cette couche primaire confère un caractère électriquement conducteur au substrat à peindre, ce caractère pouvant être rédhibitoire suivant l'utilisation dudit substrat.

Par suite, on connaît un troisième procédé visant à remédier à ce dernier inconvénient, en évitant de donner un caractère électriquement conducteur à un support devant rester électriquement neutre.

Selon le document EP0927082, on applique une couche primaire électriquement conductrice sur le substrat à peindre, à l'aide d'un spray par exemple, puis on la recouvre d'une peinture en poudre.

On réalise ensuite un cycle de chauffage permettant de cuire la peinture en poudre. De plus, en raison de la nature de la couche primaire, le substrat peint redevient non conducteur à l'issue de ce cycle de chauffage.

Bien qu'efficace, on constate que ce troisième procédé nécessite cependant l'emploi de couches primaires.

Par ailleurs, le document FR 2180676 présente un procédé de vernissage d'une pièce moulée, alors que le document EP 0698476 est relatif à l'application d'un revêtement dénommé « gel-coat » sur une feuille composite de moulage. Ces documents sont ainsi éloignés de l'invention.

La présente invention a alors pour objet de proposer un procédé de peinture s'affranchissant des limitations mentionnées ci-dessus, ce procédé de peinture ne mettant pas en œuvre de produits nuisibles pour l'environnement.

Selon l'invention, un procédé pour fabriquer un substrat peint isolant électriquement est remarquable en ce que l'on réalise successivement les étapes suivantes :
a) on dispose sur un moule un revêtement de traitement muni d'un élément électriquement conducteur, le revêtement de traitement comportant au moins une couche de préparation à base d'agent démoulant en contact avec le moule, ledit élément électriquement conducteur comprenant des nano-charges d'une épaisseur de l'ordre du nanomètre et d'une longueur de l'ordre du micromètre, lesdites nano-charges assurant une continuité électrique au sein dudit revêtement de traitement par un effet de tuilage,
b) on recouvre électro-statiquement le revêtement de traitement avec de la peinture en poudre de manière à ce que la peinture en poudre soit attirée vers le moule et maintenue contre le revêtement de traitement,
c) on transforme au moins partiellement la peinture en poudre pour obtenir un feuil de peinture, à savoir une couche de peinture pré-durcie et homogène,
d) on confectionne ledit substrat, à savoir le corps du substrat, sur ledit feuil pour obtenir le substrat peint.

De manière surprenante, la peinture en poudre durcit et adhère parfaitement au substrat, des liaisons chimiques étant créées entre cette peinture en poudre et ce substrat.

On note que le procédé selon l'invention n'implique pas l'emploi d'une couche primaire conductrice entre le substrat électriquement non conducteur et la peinture en poudre.

L'invention va à l'inverse des préjugés qui dominaient jusqu'alors en plaquant la peinture en poudre contre le revêtement de traitement d'un moule et non pas contre le substrat à peindre ce qui semble aberrant au premier abord. Selon l'invention, on fabrique un substrat peint en le confectionnant directement sur un feuil de peinture, au lieu de fabriquer un substrat que l'on peint par la suite.

Cette confection du substrat directement sur un feuil de peinture est originale et innovante. L'invention permet de fabriquer en tant que tel un substrat peint au contraire des procédés suggérés par les documents FR 2180676 et EP 0698476.

L'absence de couche primaire électriquement conductrice et l'absence d'une peinture pourvue de solvant garantissent un effet minime sur l'environnement.

De plus, l'absence d'une couche primaire électriquement conductrice minimise la masse du substrat peint de manière plus ou moins conséquente selon les dimensions du substrat.

Enfin, on note que le procédé réduit considérablement le cycle de fabrication du substrat en supprimant une étape dédiée à une phase de peinture. Les économies financières en résultant ne sont alors pas négligeables.

Par ailleurs, l'invention garantit de peindre l'intégralité du substrat, le substrat n'étant pas maintenu par une de ces extrémités pour être peint.

L'invention peut de plus comporter une ou plusieurs des caractéristiques additionnelles qui suivent.

La peinture en poudre peut faire partie du groupe des peintures en poudre thermoplastique ou thermodurcissable, et peut par exemple être du type peinture époxy, polyuréthane, polyester ou encore acrylique.

De plus, l'agent démoulant peut être un produit à base de silicone, un produit à base de solvant, un produit aqueux, un produit de type siloxane, voire un produit sans solvant.

Par ailleurs, durant l'étape d), selon une première technique on confectionne éventuellement le substrat en drapant des tissus pré-imprégnés de matériaux composites au dessus du feuil de peinture en poudre.

Ensuite, toujours durant l'étape d), après avoir drapé les tissus pré-imprégnés, on chauffe l'ensemble moule/ revêtement de traitement/ feuil de peinture/ matériaux composites du substrat afin de le polymériser pour obtenir le substrat peint.

De cette manière, ledit ensemble est chauffé à une température comprise entre 80°C et 400 °C de façon à transformer, par exemple à polymériser, à la fois le feuil de peinture et le substrat.

Les matériaux composites utilisés peuvent comporter des composites de type époxy polyester, bismaléimide, phénolique, thermoplastique ou encore thermodurcissable et des fibres de carbone, de verre d'aramide ou toutes autres fibres textiles.

Il est à noter que le substrat fini est isolant électriquement dans la mesure où il ne conduit pas l'électricité. Cette caractéristique n'est pas incompatible avec l'utilisation de fibres de carbones puisque ces fibres de carbone seront finalement entièrement noyées dans de la résine.

Selon une deuxième technique, durant l'étape d), on confectionne le substrat en disposant des fibres au dessus du feuil de peinture puis en injectant de la résine thermodurcissable ou thermoplastique réagissant in-situ (on injecte un monomère puis un catalyseur) ou à l'état fondu dans une fourchette de température allant de 80 à 420 degrés Celsius.

Les fibres utilisées peuvent être des fibres de carbone, de verre d'aramide ou toutes autres fibres textiles.

Enfin, selon une troisième technique, durant l'étape d), on confectionne le substrat en injectant au dessus du feuil de peinture des matériaux plastiques à une température allant de 80 à 500 degrés Celsius.

La transformation physique ou chimique mise en œuvre durant l'étape c), une polymérisation par exemple, est avantageusement réalisée à l'aide d'un moyen de chauffage usuel de type thermique, magnétique ou encore radiatif, en chauffant le moule par induction par exemple.

Toutefois, cette transformation, permettant d'obtenir au moins partiellement un feuil de peinture à partir d'une peinture en poudre, peut être réalisée à l'aide des techniques usuelles connues de l'homme du métier.

En outre, durant l'étape a), il est envisageable de disposer au moins une couche de préparation à base d'un agent démoulant sur le moule puis de recouvrir cette couche de préparation d'une couche de finition à base de vernis pour finaliser le revêtement de traitement.

De manière optionnelle, la peinture en poudre et/ou la couche de finition comporte des additifs de manière à conférer des caractéristiques particulières au substrat peint. Ces additifs peuvent par exemple donner un caractère antichoc, anti-foudre, antisalissure, anti-UV au substrat peint.

Avantageusement, le revêtement de traitement comportant une première et une deuxième couches de préparation à base d'agents démoulants, éventuellement des agents démoulants distincts, durant l'étape a), on dispose une première couche de préparation d'agent démoulant sur le moule, puis on polymérise la première couche de préparation d'agent démoulant avant de la recouvrir d'une deuxième couche de préparation d'agent démoulant.

Une telle préparation permet d'obtenir une meilleure qualité de la couche totale d'agent démoulant dans le moule car l'épaisseur et la répartition des deux couches sont mieux maitrisées que si l'on appliquait une seule couche de plus forte épaisseur.

La deuxième couche de préparation peut alors être recouverte d'une couche de finition à base de vernis pour finaliser le revêtement de traitement.

Par ailleurs, le revêtement de traitement étant pourvus d'un élément électriquement conducteur, au cours de l'étape b) on charge électriquement selon une première polarité l'élément électriquement conducteur, au moyen des techniques connues de l'homme du métier, puis on projette de la peinture en poudre chargée électriquement selon une deuxième polarité inverse à la première polarité de l'élément électriquement conducteur afin que la peinture en poudre soit attirée par le moule ou le revêtement de traitement.

Contrairement à la pratique, selon le procédé revendiqué, on attire la peinture en poudre vers le revêtement de traitement, donc vers le moule et non pas contre le substrat à peindre.

Une fois que la peinture en poudre est disposée de manière stable contre le revêtement de traitement, on peut alors confectionner le substrat contre cette peinture en poudre, en drapant des tissus pré-imprégnés de matériaux composites par exemple.

Le revêtement de traitement comporte donc un élément électriquement conducteur. Il n'est donc pas nécessaire que le moule soit électriquement conducteur dans la mesure où le revêtement de traitement sera chargé électriquement afin d'attirer vers lui les particules de peinture en poudre chargées électriquement avec une polarité inverse de celle du revêtement de traitement.

Selon une première variante de ce deuxième mode de réalisation, au moins une couche de préparation à base d'agent démoulant comporte un élément électriquement conducteur.

Selon une deuxième variante de ce deuxième mode de réalisation, le revêtement de traitement comportant une couche de finition à base de vernis, disposée durant l'étape a) sur ladite au moins une couche de préparation à base d'agent démoulant du revêtement de traitement, la couche de finition à base de vernis est munie d'un élément électriquement conducteur.

Selon l'invention, l'élément électriquement conducteur comprend des nano-charges d'une épaisseur de l'ordre du nanomètre et d'une longueur de l'ordre du micromètre, ces nano-charges assurant une continuité électrique au sein du revêtement de traitement par un effet de « tuilage ».

Par conséquent, chaque nano-charge chevauche une nano-charge adjacente pour recouvrir partiellement une autre nano-charge, à l'image d'une tuile, de manière à constituer une couche électriquement conductrice continue au sein du revêtement de traitement.

Cette technologie permet de plus d'avoir une couche électriquement conductrice de nano-charges d'une épaisseur extrêmement réduite et d'obtenir des caractéristiques annexes telle qu'une parfaite étanchéité.

Au moins une partie du revêtement de traitement pouvant être chimiquement liée à la peinture en poudre à l'issue du procédé, cette couche électriquement conductrice de nano-charges peut ainsi recouvrir le substrat peint à l'issue dudit procédé.

L'invention et ses avantages apparaîtront avec plus de détails dans le cadre de la description qui suit avec des exemples de réalisation donnés à titre illustratif en référence aux figures annexées qui représentent :
- la figure 1, une vue schématique explicitant le procédé selon l'invention, et
- la figure 2, une vue explicitant l'étape b) de ce procédé, et
- la figure 3, une vue schématique présentant un revêtement de traitement selon un deuxième mode de réalisation.

Les éléments présents dans plusieurs figures distinctes sont affectés d'une seule et même référence.

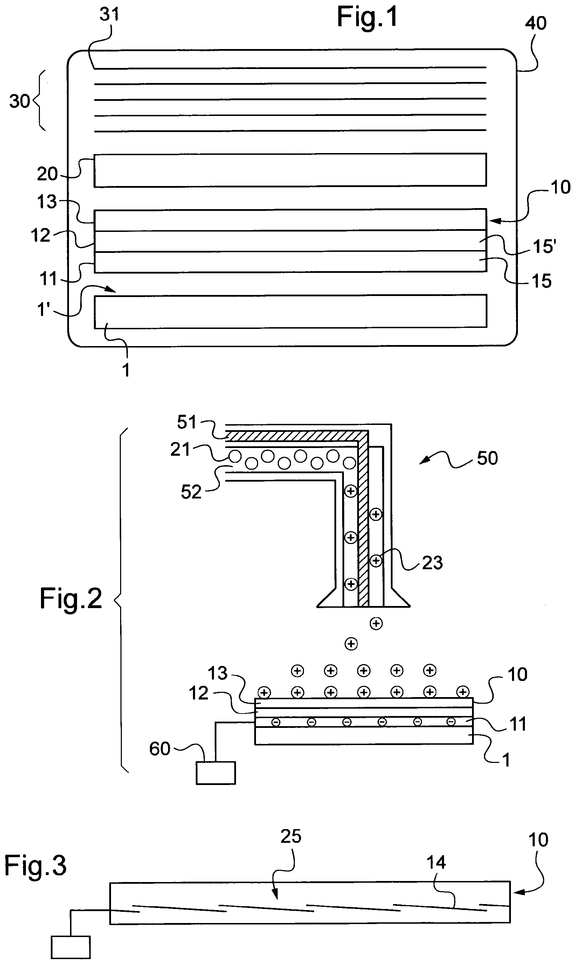

La figure 1 présente une vue schématique permettant d'expliciter le procédé selon l'invention.

Tout d'abord, durant une étape a), un opérateur procède à la mise en place d'un revêtement de traitement 10 sur un moule 1.

Par suite, il apprête le moule 1 en déposant une première couche de préparation 11 du revêtement de traitement 10 sur une face interne 1' du moule 1.

La première couche de préparation est alors réalisée à l'aide d'un agent démoulant 15 de type usuel.

De manière optionnelle, le revêtement de traitement 10 peut de plus comporter successivement une deuxième couche de préparation 12 d'agent démoulant 15' de type usuel. Les agents démoulant 15, 15' des première et deuxième couches de préparation 11, 12 peuvent alors être différents en fonction du besoin.

Dans cette configuration, durant l'étape a), lorsque la première de couche de préparation 11 est disposée contre la face interne 1' du moule 1, l'opérateur chauffe cette première couche de préparation 11 pour la transformer, en la polymérisant par exemple.

Ensuite, toujours durant l'étape a), l'opérateur applique la deuxième couche de préparation 12 contre la première couche de préparation 11.

De même, il est concevable de terminer la surface de traitement 10 en étendant un couche de finition 13 à base de vernis 16 sur la première couche de préparation 11, ou la deuxième couche de préparation 12 le cas échéant comme le montre la figure 1.

A l'issue de cette première étape a), un opérateur a donc disposé un revêtement de traitement 10 sur le moule 1.

L'étape b) du procédé va alors être mise en œuvre par cet opérateur.

Durant cette étape b), l'opérateur recouvre électro-statiquement le revêtement de traitement 10 à l'aide de peinture en poudre 21.

La peinture en poudre 21, attirée par le revêtement de traitement 10, constitue une surface sensiblement plane.

Au cours d'une étape c), l'opérateur transforme totalement ou partiellement suivant le besoin le feuil 20 de peinture en poudre pour s'assurer de sa stabilité.

Par exemple, l'opérateur polymérise la peinture en poudre par chauffage afin d'obtenir un feuil de peinture, à savoir une couche de peinture au moins pré-durcie et homogène.

Ce feuil 20 est alors conformé au moule 1 et a donc sensiblement la forme de ce moule 1. Ainsi, le feuil 20 de peinture représente une surface sur laquelle l'opérateur va pouvoir confectionner le substrat 30 composant la pièce à peindre.

Au cours d'une étape d) succédant à la transformation au moins partielle de la peinture en poutre en un feuil 20 de peinture, l'opérateur va confectionner le substrat 30 directement sur le feuil 20. Le substrat est conformé au feuil 20 de peinture et par suite au moule 1.

Pour confectionner le substrat selon une première technique, l'opérateur drape une pluralité de tissus 31 en matériaux composites sur le feuil 20 de peinture en poudre 30.

Une fois le drapage terminé, l'opérateur dispose l'ensemble comprenant le moule 1/ le revêtement de traitement 10/ le feuil 20 de peinture/ les matériaux composites constitutifs du substrat 30 dans un sac à vide 40 par exemple afin que les tissus 31 et le feuil 20 de peinture en poudre 21 prennent la forme requise du moule 1.

Pour finir, l'opérateur chauffe cet ensemble comprenant le moule 1/ le revêtement de traitement 10/ le feuil 20 de peinture/ les matériaux composites constitutifs du substrat 30 via des moyens usuels à une température comprise entre 80°C et 400°C.

A l'issue de l'étape d), l'opérateur démoule le substrat 30 peint, ce substrat 30 étant alors recouvert du feuil de peinture poudre.

Selon une deuxième technique non représentée sur une figure, l'opérateur dispose des fibres, des fibres de verre par exemple, au dessus du feuil 20 de peinture puis ferme le moule 1 à l'aide d'une coquille supérieure ayant la forme du substrat à obtenir.

Une fois le moule fermé, l'opérateur injecte de la résine chauffée entre le feuil 20 de peinture et ladite coquille supérieure.

En refroidissant, on obtient un substrat peint, ce substrat comportant des fibres noyées dans de la résine.

Selon une troisième technique non représentée sur une figure, l'opérateur ferme le moule 1 à l'aide d'une coquille supérieure ayant la forme du substrat à obtenir, puis injecte des matériaux plastiques chauffés entre le feuil 20 de peinture et ladite coquille supérieure.

La figure 2 illustre plus précisément l'étape b) du procédé.

Afin de recouvrir électro-statiquement la surface de traitement 10, l'opérateur charge électriquement, avec une première polarité, un élément électriquement conducteur en le reliant à un générateur d'électricité statique 60.

Selon le mode de réalisation représenté sur la figure 2, le revêtement de traitement 10 est muni de cet élément électriquement conducteur relié au générateur d'électricité statique 60.

En référence à la figure 3, le revêtement de traitement 10 comporte l'élément électriquement conducteur.

Ainsi, la première couche de préparation, ou la deuxième couche de préparation voire la couche de finition le cas échéant, est munie de l'élément électriquement conducteur 14.

Cet élément électriquement conducteur 14 possède une pluralité de nano-charges 25 électriquement conductrices, une nano-charge 25 recouvrant partiellement une autre nano-charge, et/ou étant recouverte partiellement par une autre nano-charge de manière à constituer l'élément électriquement conducteur relié au générateur d'électricité statique 60.

En référence à la figure 2, la peinture en poudre 21 est projetée à l'aide d'un pistolet à peinture 50.

Ce pistolet à peinture 50 comporte une alimentation électrique 51 ainsi qu'un conduit d'alimentation 52 de particules 22 électriquement neutres de peinture en poudre.

Sous l'effet du champ magnétique résultant de l'alimentation électrique 51, les particules sont chargées électriquement avec une seconde polarité de signe inverse de ladite première polarité.

Ainsi, des particules de peinture 23 chargées avec une seconde polarité, par exemple positive, sont expulsées du pistolet 50 et sont attirées par l'élément électriquement conducteur du revêtement de traitement 10, chargé électriquement avec une première polarité de signe inverse à celle de la deuxième polarité, à savoir négative selon notre exemple.

Par conséquent, ces particules 23 chargées avec une seconde polarité se déposent et sont maintenues contre le revêtement de traitement 10.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour fabriquer un substrat (30) peint à l'aide d'une peinture en poudre (21), ledit substrat étant isolant électriquement,
au cours duquel on réalise successivement les étapes suivantes :
a) On dispose sur un moule (1) un revêtement de traitement (10) muni d'un élément électriquement conducteur (14), ledit revêtement de traitement (10) comportant au moins une couche de préparation (11, 12) à base d'un agent démoulant (15, 15') en contact avec ledit moule (1), ledit élément électriquement conducteur (14) comprenant des nano-charges (25) d'une épaisseur de l'ordre du nanomètre et d'une longueur de l'ordre du micromètre, lesdites nano-charges (25) assurant une continuité électrique au sein dudit revêtement de traitement (10) par un effet de tuilage,
b) On recouvre électro-statiquement ledit revêtement de traitement (10) avec de la peinture en poudre (21) de manière à ce que ladite peinture en poudre (21) soit attirée vers ledit moule (1) et maintenu contre le revêtement de traitement (10),
c) On transforme au moins partiellement ladite peinture en poudre (21) pour obtenir un feuil (20) de peinture,
d) On confectionne ledit substrat (30) sur ledit feuil (20) pour obtenir ledit substrat peint.

2. Procédé selon l'une quelconque des revendications précédentes,
**caractérisé en ce que** ledit revêtement de traitement comprend au moins une première couche de préparation (11) à base d'agent démoulant et une couche de finition, ladite au moins une première couche de préparation (11) étant disposée sur ledit moule (1) puis recouverte d'une couche de finition (13) à base de vernis.

3. Procédé selon l'une quelconque des revendications précédentes,
**caractérisé en ce que**, ledit revêtement de traitement (10) comporte une premier et une deuxième couches de préparation (11, 12) à base d'agents démoulants (15', 15), une première couche de préparation (11) à base d'agent démoulant (15) étant disposée sur ledit moule (1), puis polymérisée et recouverte d'une deuxième couche de préparation (12) à base d'agent démoulant (15').

4. Procédé selon l'une quelconque des revendications précédentes,
**caractérisé en ce que**, ledit revêtement de traitement (10) étant pourvu d'un élément électriquement conducteur, au cours de l'étape b) on charge électriquement selon une première polarité ledit élément électriquement conducteur puis on projette de la peinture en poudre (21) chargée électriquement selon une seconde polarité de signe inverse à ladite première polarité afin que ladite peinture en poudre (21) soit attirée par ledit moule (1) ou ledit revêtement de traitement (10).

5. Procédé selon l'une quelconque des revendications précédentes,
**caractérisé en ce qu'**au moins une couche de préparation (11,12) à base d'agent démoulant (15, 15') comporte un élément électriquement conducteur (14).

6. Procédé selon l'une quelconque des revendications,
**caractérisé en ce que**, ledit revêtement de traitement (10) comportant une couche de finition (13) à base de vernis disposée sur ladite au moins une couche de préparation (11, 12) à base d'agent démoulant (15, 15') du revêtement de traitement (10) durant l'étape a), ladite couche de finition (13) à base de vernis comporte un élément électriquement conducteur (14).

7. Procédé selon l'une quelconque des revendications précédentes,
**caractérisé en ce que**, durant l'étape d), on confectionne ledit substrat (30) en drapant des tissus (31) pré-imprégnés de matériaux composites au dessus dudit feuil (20) de peinture en poudre (21).

8. Procédé selon la revendication 7,
**caractérisé en ce que**, durant l'étape d), après avoir drapé lesdits tissus (31) pré-imprégnés, on chauffe l'ensemble moule/ revêtement de traitement/ feuil de peinture/ matériaux composites du substrat afin de le polymériser et d'obtenir le substrat peint.

9. Procédé selon la revendication 8,
**caractérisé en ce que**, durant l'étape d), on chauffe à une température comprise entre 80°C et 400°C.

10. Procédé selon l'une quelconque des revendications 1 à 7,
**caractérisé en ce que**, durant l'étape d), on confectionne ledit substrat (30) en disposant des fibres au dessus dudit feuil de peinture puis en injectant de la résine.

11. Procédé selon l'une quelconque des revendications 1 à 7,
**caractérisé en ce que**, durant l'étape d), on confectionne ledit substrat (30) en injectant au dessus dudit feuil de peinture des matériaux plastiques.

## Patentansprüche

1. Verfahren zur Herstellung eines mit einer Pulverlackierung (21) lackierten Substrats (30), wobei das Substrat elektrisch isolierend ist, bei dem die folgenden Schritte nacheinander ausgeführt werden:
a) ein mit einem elektrisch leitfähigen Element (14) versehener Behandlungsüberzug (10) wird auf eine Form (1) aufgebracht, wobei der Behandlungsüberzug (10) mindestens eine Vorbereitungsschicht (11, 12) auf der Basis eines Trennmittels (15, 15') in Kontakt mit der Form (1) aufweist, das elektrisch leitfähige Element (14) Nanozuschläge (25) mit einer Dicke in der Größenordnung eines Nanometers und einer Länge in der Größenordnung eines Mikrometers umfasst, wobei die Nanozuschläge (25) durch einen Kachelungseffekt für elektrische Kontinuität innerhalb des Behandlungsüberzugs (10) sorgen,
b) der Behandlungsüberzug (10) elektrostatisch mit Pulverlack (21) beschichtet wird, so dass der Pulverlack (21) von der Form (1) angezogen und an dem Behandlungsüberzug (10) gehalten wird,
c) der Pulverlack (21) zumindest teilweise umgewandelt wird, um einen Lackfilm (20) zu bilden,
d) das Substrat (30) auf dem Film (20) konfektioniert wird, um das lackierte Substrat zu erhalten.

2. Verfahren nach einem der vorhergehenden Ansprüche,
**dadurch gekennzeichnet, dass** der Behandlungsüberzug mindestens eine erste Vorbereitungsschicht (11) auf der Basis eines Trennmittels und eine Abschlussschicht umfasst, bei dem die mindestens eine erste Vorbereitungsschicht (11) auf der Form (1) angeordnet und dann mit einer Abschlussschicht (13) auf Firnisbasis bedeckt wird.

3. Verfahren nach einem der vorhergehenden Ansprüche,
**dadurch gekennzeichnet, dass** der Behandlungsüberzug (10) eine erste und eine zweite Vorbereitungsschicht (11, 12) auf der Basis von Trennmitteln (15', 15) umfasst, wobei eine erste Vorbereitungsschicht (11) auf der Basis eines Trennmittels (15) auf der Form (1) angeordnet, dann polymerisiert und mit einer zweiten Vorbereitungsschicht (12) auf der Basis eines Trennmittels (15') bedeckt wird.

4. Verfahren nach einem der vorhergehenden Ansprüche,
**dadurch gekennzeichnet, dass** der Behandlungsüberzug (10) mit einem elektrisch leitfähigen Element versehen ist, dass in Schritt b) das elektrisch leitende Element mit einer ersten Polarität elektrisch geladen wird und dann Pulverlack (21), der mit einer zweiten Polarität mit zu der ersten Polarität entgegengesetztem Vorzeichen elektrisch geladen ist, gesprüht wird, so dass der Pulverlack (21) von der Form (1) oder der Prozessbeschichtung (10) angezogen wird.

5. Verfahren nach einem der vorhergehenden Ansprüche,
**dadurch gekennzeichnet, dass** mindestens eine Vorbereitungsschicht (11, 12) auf der Basis eines Trennmittels (15, 15') ein elektrisch leitfähiges Element (14) umfasst.

6. Verfahren nach einem der Ansprüche,
**dadurch gekennzeichnet, dass** die Behandlungsbeschichtung (10) eine Abschlussschicht (13) auf Lackbasis umfasst, die auf der mindestens einen Vorbereitungsschicht (11, 12) auf der Basis eines Trennmittels (15, 15') für die Behandlungsbeschichtung (10) in Schritt a) angeordnet wird, wobei die Abschlussschicht (13) auf Firnisbasis ein elektrisch leitfähiges Element (14) umfasst.

7. Verfahren nach einem der vorhergehenden Ansprüche,
**dadurch gekennzeichnet, dass** in Schritt d) das Substrat (30) konfektioniert wird, indem mit Verbundmaterialien vorimprägnierte Gewebe (31) über den Film (20) aus Pulverlack (21) drapiert werden.

8. Verfahren nach Anspruch 7,
**dadurch gekennzeichnet, dass** während des Schritts d), nach dem Drapieren der vorimprägnierten Gewebe (31), die Anordnung Form/Behandlungsüberzug/Lackfilm/Verbundmaterialien des Substrats erhitzt wird, um sie zu polymerisieren und das lackierte Substrat zu erhalten.

9. Verfahren nach Anspruch 8,
**dadurch gekennzeichnet, dass** in Schritt d) eine Erwärmung auf eine Temperatur zwischen 80°C und 400°C durchgeführt wird.

10. Verfahren nach einem der Ansprüche 1 bis 7,
**dadurch gekennzeichnet, dass** in Schritt d) das Substrat (30) durch Anordnen von Fasern über dem Lackfilm und anschließendes Einspritzen von Harz hergestellt wird.

11. Verfahren nach einem der Ansprüche 1 bis 7,
**dadurch gekennzeichnet, dass** in Schritt d) das Substrat (30) durch Einspritzen von Kunststoffmaterialien über dem Lackfilm konfektioniert wird.

## Claims

1. Method for producing a substrate (30) painted using a powder paint (21), said substrate being electrically insulating, during which the following steps are successively carried out:
a) a treatment coating (10) is provided on a mould (1) with an electrically conductive element (14), said treatment coating (10) comprising at least one preparation layer (11, 12) based on a release agent (15, 15') in contact with said mould (1), said electrically conductive element (14) comprising nano-fillers (25) of a thickness of the order of one nanometer and a length of the order of one micrometer, said nano-fillers(25) providing an electrical continuity within said treatment coating (10) through a tiling effect;
b) electrostatically coating said treatment coating (10) with powder paint (21) so that said powder paint (21) is attracted to said mould (1) and held against the treatment coating (10);
c) at least partially transforming said powder paint (21) to obtain a film (20) of paint;
d) preparing said substrate (30) on said film (20) to obtain said painted substrate.

2. Method according to any one of the preceding claims, **characterised in that** said treatment coating comprises at least a first preparation layer (11) based on release agent and a topcoat, said at least one first preparation layer (11) being disposed on said mould (1) then covered with a topcoat (13) based on lacquer.

3. Method according to any one of the preceding claims, **characterised in that** said treatment coating (10) comprises first and second preparation layers (11, 12) based on release agents (15', 15), a first preparation layer (11) with mould release agent base (15) being disposed on said mould (1), then polymerised and covered with a second preparation layer (12) based on release agent (15').

4. Method according to any one of the preceding claims, **characterised in that** said treatment coating (10) is provided with an electrically conductive element, during step b) said electrically conductive element is electrically charged according to a first polarity and then powder paint (21) is sprayed which is electrically charged according to a second polarity that is the opposite to said first polarity so that said powder paint (21) is attracted to said mould (1) or said treatment coating (10).

5. Method according to any one of the preceding claims, **characterised in that** at least one preparation layer (11, 12) based on release agent (15, 15') comprises an electrically conductive element (14).

6. Method according to any one of the claims, **characterised in that** said treatment coating (10) having topcoat (13) based on lacquer is disposed on said at least one preparation layer (11, 12) based on release agent (15, 15') of the treatment coating (10) during step a), said topcoat (13) based on lacquer having an electrically conductive element (14).

7. Method according to any one of the preceding claims, **characterised in that** during step d), said substrate (30) is made by draping fabrics (31) pre-impregnated with composite materials over said film (20) of powder paint (21).

8. Method according to claim 7, **characterised in that** during step d), after having draped said pre-impregnated fabrics (31), the mould / treatment coating / paint film / composite material assembly of the substrate is heated in order to polymerise it and to obtain the painted substrate.

9. Method according to claim 8, **characterised in that** during step d), heating is carried out at a temperature of between 80°C and 400°C.

10. Method according to any one of claims 1 to 7, **characterised in that**, during step d), said substrate (30) is made by placing fibres over said paint film and then injecting resin.

11. Method according to any one of claims 1 to 7, **characterised in that**, during step d), said substrate (30) is made by injecting plastic materials over said paint film.
